## Europäisches Patentamt
## European Patent Office
## Office européen des brevets

(11) Veröffentlichungsnummer: **0 132 666**
**B1**

(12) **EUROPÄISCHE PATENTSCHRIFT**

(45) Veröffentlichungstag der Patentschrift: 30.05.90

(51) Int. Cl.⁵: **A 23 L 3/10,** G 05 D 23/19

(21) Anmeldenummer: **84107956.9**

(22) Anmeldetag: **06.07.84**

(54) **Verfahren zur Sterilisierung von Konserven durch Erhitzen.**

(30) Priorität: **21.07.83 DE 3326231**

(43) Veröffentlichungstag der Anmeldung:
**13.02.85 Patentblatt 85/07**

(45) Bekanntmachung des Hinweises auf die
Patenterteilung:
**30.05.90 Patentblatt 90/22**

(84) Benannte Vertragsstaaten:
**AT CH DE FR LI NL**

(56) Entgegenhaltungen:
**DE-A-3 019 202
US-A-4 372 916**

(73) Patentinhaber: **Schroeder, Helmut
Neue Strasse 14
D-7300 Esslingen a.N. (DE)**

(72) Erfinder: **Schroeder, Helmut
Neue Strasse 14
D-7300 Esslingen a.N. (DE)**

(74) Vertreter: **Stadler, Heinz, Dipl.-Ing.
Weikersheimerstrasse 17
D-7000 Stuttgart 40 (DE)**

Courier Press, Leamington Spa, England.

EP 0 132 666 B1

## Beschreibung

Die Erfindung betrifft ein Verfahren zur Sterilisierung von Konserven durch Erhitzen in einem Autoklaven, bei dem aus in einstellbaren Zeitabständen gemessenen Kerntemperaturwerten der aufsummierte F-Wert elektronisch ermittelt und beim Erreichen eines für die jeweilige Konserve relevanten einstellbaren Soll-F-Wertes ein steuersignal erzeugt wird.

Die Temperatur wird im Kern der Konserve gemessen, weil dies beim Erhitzen ("Kochung") der kälteste Bereich ist. Der F-Wert ist ein Maß für die Güte der Sterilisierung. Dabei entspricht produktabhängig jeder Kerntemperatur ein bestimmter F-Wert. Beispielsweise gilt für Fleischkonserven der Zusammenhang

$$F = 10^{\frac{t-121,1}{10}} \quad 1/min,$$

wobei t die mit einer Stichsonde gemessene Kerntemperatur in °C ist. Ein F-Wert von 1 bedeutet als die bakterientötende Wirkung, die bei 121,1°C (=250°F) während 1 Minute erzielt ist. Eine Erhöhung der Kerntemperatur um 10°C ergibt den 10-fachen F-Wert. Der gesamte zeit- und temperaturabhängige F-Wert wird durch Addition der pro Minute erreichten, der jeweiligen Kerntemperatur entsprechenden einzelnen F-Werte gebildet. Soll z.B. eine Fleischkonserve die Klassifizierung "Vollkonserve" (langfristig lagerfähig bei 25°C) erhalten, so ist dafür ein gesamter F-Wert von maximal etwa 6 erforderlich. Dieser ist erzielbar, wenn die Kerntemperatur

1 min. lang 128,8°C oder
10 min. lang 118,8°C oder
100 min. lang 108,8°C oder
1000 min. lang 98,8°C beträgt.

Schon bei 100-minütiger Kochung wäre jedoch die Konserve verkocht, d.h. ihre Konsistenz breiartig. Dies ist nur durch Verkürzung der Kochzeit zu vermeiden, weshalb in der Praxis die Kochung unter Überdruck, in der Regel in einem Autoklaven durchgeführt wird, wobie die Kerntemperaturen von weit über der Siedetemperatur des Wassers möglich sind.

Ein Verfahren der eingangs genannten Art ist aus der DE 30 19 202 A1 bekannt. Es ist auf die Optimierung der Sterilisationsdauer gerichtet und soll unabhängig von einer vorgegebenen Sterilisationszeit sowie der Art und des Volumens der Verpackung sein. Dazu ist vorgesehen, daß die Erhitzung der Konserven im Kern, beginnend mit einer Temperatur von 100°C über eine Zeitspanne erfolgt, die gleich $F_1 = F_{gesamt} - F_2$ ist, wobei $F_1$ die Spanne bis zum Ende des Sterilisationsvorgangs ist und $F_2$ die sich anschließende Spanne bis zum Wiedererreichen einer Temperatur von 100°C.

Gegenüber der älteren Methode, bei der lediglich die Kerntemperatur gemessen wurde und das Bedienungspersonal diese nach jedem Zeitintervall ablesen, den zugehörigen F-Wert einer Tabelle entnehmen und ihn zu dem bis dahin erreichten F-Wert hinzuaddieren mußte, bietet das bekannte Verfahren den Vorteil einer bereits beachtlichen Zeitersparnis. Allerdings ist es relativ kompliziert und schon wegen der erforderlichen Ermittlung des Wärmeprofils durch Probekochungen aufwendig. Zudem ist damit allenfalls ein Schutz gegen Überkochungen erreichbar. Schließlich ist auch bei diesem Verfahren noch Personal zur Überwachung der Kochung nötig, das ständig die aufsummierten F-Werte überprüft. Aber selbst mit hohem Personalaufwand lassen sich, insbesondere bei großen Konservierungsunternehmen mit einer Vielzahl von Autoklaven, vor allem durch mangelnde Aufmerksamkeit bedingte Überwachungsfehler und damit Qualitätsmängel bzw. Ausschußware nicht vermeiden, so daß ein rentabler Betrieb vielfach nicht gewährleistet ist.

Der Erfindung liegt die Aufgabe zugrunde, ein Verfahren der eingangs genannten Art zu schaffen, bei dem der Überwachungs- und Bedienungsaufwand und zugleich die Gefahr von Verkochungen und Untersterilisierungen auf möglichst einfache und kostensparende Weise verringert ist.

Diese Aufgabe ist dadurch gelöst, daß
—der Soll-F-Wert der Sollwert des Gesamt-F-Wertes ist,
—beim Erreichen bzw. Überschreiten des einstellbaren konservenspezifischen Sollwertes der Kerntemperatur wenigstens ein weiteres Steuersignal ($S_2$) erzeugt wird,
—die Steuersignal ($S_1$, $S_2$) die selbsttätige Abschaltung der Konservierungsanlage sowie die Abführung des Heißwassers aus dem Autoklaven (2) und die Zufuhr von Kühlwasser bewirken und
—beim Erreichen bzw. Unterschreiten der Soll-Kerntemperatur bei abgekühlter Konserve (1) ein akustisches und/oder optischen Warnsignal ausgelöst wird.

Damit ist die Bedienung der Konservierungsanlage mit geringem Mehraufwand auf das Einstellen der Sollwerte von Kerntemperatur und/oder Gesamt-F-Wert reduziert, so daß mit minimalem Personalaufwand eine wesentliche Erhöhung der Sicherheit gegen Unterkochungen und eine Absolute Sicherheit gegen Überkochen der Konserven unabhängig von Anzahl und Aufmerksamkeit des Personals gewährleistet ist, wobei an manueller Arbeit lediglich das Be- und Entladen des Autoklaven verbleibt und durch das Aufmerksammachen auf die Beendigung des Konservierungsprozesses mittels eines Warnsignals ein effektiver Einsatz des geringen erforderlichen Restpersonals erreicht wird. Dieser Vorteil der Kosten- und Ausfallquotenverminderung kommt insbesondere bei Großbetrieben mit vielen gleichzeitig arbeitenden Konservierungsanlagen zum Tragen und erlaubt im Grenzfall die Weiterführung eines Unternehmens, das sonst unterhalb der Rentabilitätsgrenze arbeiten würde.

Eine besonders einfache Schaltung zur Realisierung des erfindungsgemäßen Verfahrens ergibt sich bei einer Ausführung nach Anspruch 2, weil dabei die zu addierenden F-Werte nicht aus der eingangs angegebenen mathematischen Beziehung zwischen F-Wert pro Minute und Kerntemperatur berechnet werden müssen, sondern aus einer z.B. in einem EPROM gespeicherten, diesem Gesetz entsprechenden Tabelle entnehmbar ist.

Ein einfaches und zweckmäßiges Gerät zur Durchführung des erfindungsgemäßen Verfahrens ist in Anspruch 3 beschrieben. Dabei sind die Temperatur- und F-Werte besonders leicht und übersichtlich ablesbar, wenn das Display nach Anspruch 4 aufgebaut ist, so daß eine schnelle und sichere optische Überwachung sowohl des Aufheiz- als auch des Abkühlvorgangs ermöglicht ist.

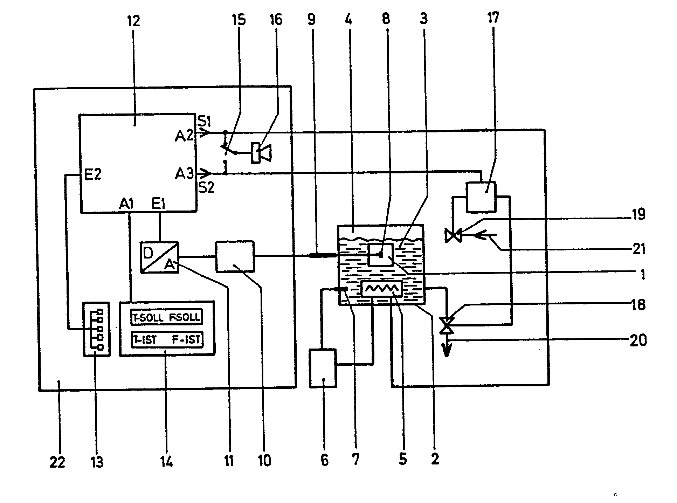

Die Figur zeigt den schematischen Aufbau einer Konservierungsanlage zur Durchführung des erfindungsgemäßen Verfahrens mit Hilfe eines erfindungsgemäßen Meß- und Steuergerätes.

Die zu sterilisierenden Konserven, von denen der Übersichtlichkeit halber nur eine, normalerweiser am kältesten Ort in deren Mitte angeordnete Probekonserve 1 dargestellt ist, befinden sich in einem druckdicht verschlossenem Autoklaven 2 in einem Wasserbad 3, das einen Kopfraum 4 zur Aufnahme des beim Erhitzen entstehenden Wasserdampf-Luft-Gemisches freiläßt. Der Überdruck im Autoklaven 2 wird mittels eines Heizelementes 5 erzeugt und über ein Kontaktthermometer 6 gesteuert, dem die Meßtemperatur von einem im Autoklaven 2 angeordneten Temperaturfühler zugeführt wird und mit dessen Hilfe die gewünschte Wasser- bzw. Dampftemperatur sowie der Druck im Autoklaven 2 einstellbar ist.

Die Kerntemperatur der Probekonserve 1 wird mit Hilfe einer Stichsonde 9 gemessen, deren als Thermoelement ausgebildete Meßspitze 8 wasserdicht in den Konservenkern (kältester Ort) eingeführt ist. Der mit steigender Kerntemperatur wachsende elektrische Widerstand des Thermoelementes wird einem Meßverstärker 10 zugeführt, der eine dazu proportionale Ausgangsspannung liefert, die in einem nachfolgenden 8-Bit-A/D-Wandler 11 in ein digitales Signal umgewandelt und auf den Eingang E1 eines Microcomputers 12 gegeben wird.

Über einen zweiten Eingang E2 werden dem Microcomputer 12 Steuerbefehle von einem Tastenfeld 13 zugeführt, das jeweils zwei Tasten für die Einstellung (höher/tiefer) des Sollwertes Kerntemperatur und des F-Wertes, sowie eine Taste zum Starten bzw. Löschen der F-Wert-Addition. Der Microcomputer 12 besteht aus einer CPU (Central Processing Unit) einschließlich eines RAM (Random Access Memory), sowie einem PIA (Peripherer Interface Adapter), einem Latch und einem EPROM (Electronically Programmable Read Only Memory). Letzterer ist derart programmiert, daß

—die gemessene Kerntemperatur an einem am Ausgang A1 angeschlossenen Display 14 angezeigt wird,

—gemäß einer einprogrammierten, produktspezifischen Tabelle die zugehörigen F-Werte bestimmt, auf entsprechenden Tastendruck in Minutenabstand addiert und der Summen-F-Wert am Display 14 angezeigt wird,

—die Sollwerte der Kerntemperatur und des Summen-F-Wertes in einem Bereich von 0—200°C bzw. 0—20 einstellbar sind,

—der Istwert der Kerntemperatur mit dem eingestellten Sollwert verglichen wird und bei dessen Erreichen bzw. Überschreiten ein Steuersignal S1 am Ausgang A2 erzeugt wird,

—der Istwert des Summen-F-Wertes mit dem eingestellten Sollwert verglichen wird und bei dessen Erreichen bzw. Überschreiten ein Steuersignal S2 am Ausgang A3 erzeugt wird.

Das Steuersignal S1 bewirkt die Abschaltung des Heizelementes 5 und wahlweise über einen Schalter 15 einen akustischen Alarm mittels eines Signalgebers 16. Das Steuersignal S2 steuert über ein Verzögerungsglied 17 und jeweils ein Ventil 18, 19 in der Wasser-Abfluß-bzw. -Zuflußleitung 20, 21 den Wasserstand im Autoklaven 2 derart, daß nacheinander das Heißwasser abgepumpt und das Kühlwasser zugeführt wird.

Meßverstärker 10, D/A-Wandler 11, Microcomputer 12, Tastatur 13, Display 14, Schalter 15 und akustischer Signalgeber 16 sind in einem handlichen kleinen und leicht tragbaren Gerät eingebaut. Die Konservierungsanlage gewährleistet trotz ihres einfachen und kostengünstigen Aufbaus mit geringstem Überwachungsaufwand einen sehr sicheren, für Massenkonservierung geeigneten Betrieb.

**Patentansprüche**

1. Verfahren zur Sterilisierung von Konserven durch Erhitzen in einem Autoklaven, bei dem aus in einstellbaren Zeitabständen gemessenen Kerntemperaturwerten der aufsummierte F-Wert elektronisch ermittelt und beim Erreichen eines für die jeweilige Konserve relevanten einstellbaren Soll-F-Wertes ein Steuersignal erzeugt wird, dadurch gekennzeichnet, daß

—der Soll-F-Wert der Sollwert des Gesamt-F-Wertes ist,

—beim Erreichen bzw. Überschreiten des einstellbaren konservenspezifischen Sollwertes der Kerntemperatur wenigstens ein weiteres Steuersignal ($S_2$) erzeugt wird,

—die Steuersignale ($S_1$, $S_2$) die selbsttätige Abschaltung der Konservierungsanlage sowie die Abführung des Heißwassers aus dem Autoklaven (2) und die Zufuhr von Kühlwasser bewirken und

—beim Erreichen bzw. Unterschreiten der Soll-Kerntemperatur bei abgekühlter Konserve (1) ein akustisches und/oder optischen Warnsignal ausgelöst wird.

2. Verfahren nach Anspruch 1, dadurch gekennzeichnet, daß die F-Wert-Summierung durch Addition der zu den in den eingestellten Zeitabständen gemessenen Temperaturwerten gehörigen F-Wert-Schritte erfolgt, welche einem Speicher entnehmbar sind, in dem ihre produktspezifische Temperaturabhängigkeit einprogrammiert ist.

3. Meß- und Steuergerät zur Durchführung des Verfahrens gemäß einem der Ansprüche 1 oder 2 mit einem die F-Wert-Daten verarbeitenden Rechner, dadurch gekennzeichnet, daß zur Erzeugung der Steuersignale ($S_1$, $S_2$) und der Signale für die Temperatur- und F-Wert-Anzeige an einem Display (14) ein aus einer CPU mit ein RAM, einem Interface (PIA), einem Latch und einem EPROM aufgebauten Microkomputer (12) vorgesehen ist, dem einseitig die mittels eines Thermoelementes (8) in Form von Änderungen des elektrischen Widerstandes gemessenen, mit Hilfe eines A/D-Wandlers (11) in Digitalsignale umgewandelten Temperaturen zugeführt sind.

4. Gerät nach Anspruch 3, dadurch gekennzeichnet, daß in dem Display (14) jeweils die Ist- und Sollwerte von Temperatur und summierten F-Wert übereinander angezeigt werden.

## Revendications

1. Procédé pour la stérilisation de conserves par réchauffement dans un autoclave, dans lequel la valeur cumulée F est déterminée électroniquement à partir de valeurs de température à coeur mesurées à intervalles de temps réglables et dans lequel un signal de commande est généré lorsqu'une valeur de consigne F, réglable en fonction du type de conserve, est atteinte, caractérisé en ce que

—la valeur de consigne F est la valeur de consigne de la valeur F totale,

—au moins un autre signal de commande (S2) est généré lorsque la valeur de consigne réglable de la température à coeur spécifique à la conserve est atteinte ou dépassée,

—les signaux de commande (S1, S2) provoquent la coupure automatique de la ligne de mise en conserves ainsi que l'évacuation de l'eau chaude hors de l'autoclave (2) et l'arrivée d'eau de refroidissement et

—un signal avertisseur acoustique et/ou optique est déclenché lorsque la température atteint ou devient inférieure à la température à coeur de consigne de la conserve refroidie (1).

2. Procédé selon la revendication 1, caractérisé en ce que le cumul des valeurs F s'effectue par addition des pas de valeurs F correspondant aux valeurs de températures mesurées aux intervalles de temps réglés, ces pas de valeurs pouvant être prélevés dans une mémoire dans laquelle est programmée leur variation par rapport à la température en fonction du produit concerné.

3. Appareil de mesure et de commande pour la mise en oeuvre du procédé selon l'une des revendications 1 ou 2, avec un calculateur traitant les données de valeurs F, caractérisé en ce que, pour générer les signaux de commande (S1, S2) et les signaux pour l'affichage de la température et de la valeur F sur un écran, il est prévu un micro-ordinateur (12) composé d'une unité centrale avec une mémoire RAM, une interface (PIA), un latch et une EPROM, ordinateur auquel sont amenés d'un côté les températures, mesurées à l'aide d'un thermocouple (8) sous forme de variations de la résistance électrique et converties en signaux numériques à l'aide d'un convertisseur A/N (11).

4. Appareil selon la revendication 3, caractérisé en ce que les valeurs réelles et les valeurs de consigne de la température et les valeurs F cumulées sont affichées les unes au-dessus des autres sur l'écran (14).

## Claims

1. Process for the sterilization of preserved food by heating in an autoclave, in which the summed-up F value is electronically detected from core temperature values measured at settable time intervals, and a control signal is generated upon attachment of a settable set-point F value relevant to the particular preserved food, characterized in that

—the set-point F value is the set-point value of the total F value,

—if the settable set-point value of the core temperature specific to the preserved food is attained or exceeded, at least one further control signal ($S_2$) is generated,

—the control signals ($S_1$, $S_2$) effect both the automatic shutoff of the food preserving system and the removal of the hot water from the autoclave (2) as well as the delivery of cool water, and

—if the core temperature attains the set-point core temperature or drops below it when the preserved food (1) is cooled down, an acoustical and/or optical warning signal is tripped.

2. Process according to claim 1, characterized in that the F value summation is effected by addition of the F-value steps belonging to the temperature values measured at the set time intervals, which steps can be taken from a memory into which their product-specific temperature dependency has been programmed in.

3. Measurement and control apparatus for performing the process according to one of claims 1 or 2 with a computer processing the F-value data, characterized in that to generate the control signals ($S_1$, $S_2$) and the signals for displaying the temperature and the F-value on a display (14), a microcomputer (12) made up of a CPU with a RAM, an interface (PAI), a latch and an EPROM is provided, to the input side of which the temperatures, measured by means of a thermal element (8) in the form of variations of the electrical resistance, and converted into digital signals with the aid of an A/D converter (11), are supplied.

4. Apparatus according to claim 3, characterized in that the actual and set-point values of both the temperature and the summed F value are displayed one above the other on the display (14).